# EUROPEAN PATENT APPLICATION

(11) **EP 4 752 241 A1**
(43) Date of publication of application: **03.06.2026**
(21) Application number: 25219481.6
(22) Date of filing: 28.11.2025
(51) Int. Cl.: C22B 3/02, C22B 3/12, C22B 3/44, C22B 30/04, C22B 15/00

(54) **METHOD AND APPARATUS FOR THE BENEFICIATION OF ORE**

(30) Priority: 28.11.2024 AU 2024903939
(71) Applicant: Fortescue Ltd, East Perth, Western Australia 6004 (AU)
(72) Inventor: Turner, Duncan William, EAST PERTH, 6004 (AU); MacDonald, Charles Lachlan, EAST PERTH, 6004 (AU)
(74) Representative: Lavoix

(57) **Abstract**

An apparatus, when used for the beneficiation of ore, comprising: a separation unit that separates a feed into a product stream that includes concentrated product and a leach stream that includes arsenic via a leaching process; an oxidation unit that produces an oxidised solution from the leach stream; and a reclamation unit that reclaims reagent from the oxidised solution for re-use in the leaching process.

## Description

### TECHNICAL FIELD

The present invention relates to a method and apparatus for beneficiating ore and more specifically, but not exclusively, to a method and apparatus for beneficiating sulphide ores to recover minerals such as copper with improved cost effectiveness and/or energy efficiency.

### BACKGROUND

Global mining operations are facing increasing challenges as clean ore deposits are depleted, with a higher proportion of dirty ore bodies remaining available for exploit. It is desirable to treat material within the ore body in order to recover the valuable mineral components. However, the beneficiation of the ore material requires the mineral components to be separated from surrounding gangue and other impurities, which must then be disposed of or at the very least managed at the mine or processing site.

Typically, the liberation of valuable minerals from the surrounding gangue and impurities may involve the leaching of the ore or a concentrate thereof in a chemical reagent. For example, traditional leaching methods used to treat sulphide ores containing copper require large quantities of reagent, and, at least partly as a consequence thereof, tend to be costly and environmentally unfriendly. Further, depending on the nature of reactant and leaching used, it is often necessary to perform several downstream processing steps to ensure adequate recovery of minerals from the leach wash.

Copper (Cu) is a significant resource, used in a multitude of applications. Copper mining operations globally are increasingly facing challenges as clean ore bodies are depleted, with a higher proportion of impure ore bodies remaining available for exploit. One of the most significant impurities present in low quality copper ore bodies is arsenic (As). Left untreated, arsenic is known to have detrimental health and environmental impact.

In view of the environmental and safety issues arising from the processing of copper ore deposits with significant arsenic content, many jurisdictions around the world have set maximum allowable concentrations of arsenic acceptance in mine products. Traditionally, arsenic leaching for removal from copper product requires large and expensive quantities of caustic reagent addition and management of caustic waste streams. These traditional leaching methods are consequently typically costly as well as environmentally unfriendly.

Notably, copper is often found in ore deposits including other valuable minerals such as lead (Pb), zinc (Zn), gold (Au), tellurium (Te) and silver (Ag). It would be advantageous to recover such minerals during the copper beneficiation process to increase commercial yield of the mining operation. In addition, it would be beneficial if by-products produced from the beneficiation process were of a saleable nature and/or grade.

Within this context, there is a need for a method of mining copper with improved cost effectiveness and/or energy efficiency, or to at least provide the public with a useful choice. The present invention was conceived with these shortcomings in mind.

### SUMMARY

**In** a first aspect, the invention provides an apparatus, when used for the beneficiation of ore, comprising: a separation unit that separates a feed into a product stream that includes concentrated product and a leach stream that includes arsenic via a leaching process; an oxidation unit that produces an oxidised solution from the leach stream; and a reclamation unit that reclaims reagent from the oxidised solution for re-use in the leaching process.

The reagent used in the leaching process may include both reclaimed reagent from the reclamation unit and fresh reagent from a supply. The reagent may be sodium hydroxide.

In some embodiments, the separation unit may include a filter that is arranged to extract solid product from the leach stream via a filtration process. The filter may be a filter press equipped with membrane squeezing. The solid product may comprise at least one of antimony, copper, lead, gold, nickel, and tellurium.

The separation unit may include a recycle loop for recycling at least a portion of the leach stream. The separation unit may separate the feed into the product steam and the leach stream by washing, and the recycled portion of the leach stream comprises a leach wash. The recycled leach stream may include sodium sulphide.

In some embodiments, the oxidation unit may include a pressure vessel arranged to oxidise the leach stream. Alternatively or additionally, the oxidation unit may include a condenser that condenses steam produced during the oxidation process with condensate being transferred to the separation unit for reuse.

The oxidation unit may include a filter that is arranged to recover further product from the oxidised leach steam via a filtration process. The filter may be a candle filter. The further product may include at least one of gold, antimony and tellurium.

In some embodiments, the reclamation unit may comprise a precipitation module that removes arsenic from the oxidised solution as a precipitate. The precipitate may be in the form of a calcium arsenate precursor. A reactant may be added to the oxidised solution in the precipitation module. The reactant may be lime.

The precipitation module may be arranged to produce glass from the precipitate. Alternatively, the precipitation module may be arranged to produce scorodite from the precipitate. Alternatively, the precipitation module is arranged to produce a geopolymer from the precipitate.

In some embodiments, the reclamation unit may comprise a crystallisation module that liberates the reagent by crystallising impurities. The crystallised impurities may include Glauber's Salt. The crystallisation module may be arranged to produce sodium sulphate byproduct from the crystallised impurities.

The crystallisation module may include a splitter that is arranged to split the sodium sulphate into sodium hydroxide for use as reagent and sulphuric acid product.

In some embodiments, the reclamation unit may comprise an evaporation module arranged to increase a concentration of the reagent via an evaporation process.

The apparatus may further comprise a preparation unit that is arranged to provide the feed to the separation unit at a predetermined arsenic content. The predetermined arsenic concentration may be chosen from a range extending between 0.5% and 5.2% w/w. For example, the predetermined arsenic concentration may be one of about 1%, 2%, 3%, 4% or 5% w/w. Raw ore material provided to the preparation unit may be of low grade.

In a second aspect, the invention provides an ore beneficiation method, comprising: separating a feed into a product stream that includes concentrated product and a leach stream that includes arsenic via a leaching process; oxidising the leach stream to produce an oxidised solution; and reclaiming reagent from the oxidised solution for re-use in the leaching process.

In a third aspect, the invention provides an apparatus, when used for the beneficiation of ore, comprising: a separation unit that separates a feed into a concentrate stream that includes product solids and a leach stream that includes arsenic via a leaching process; and an oxidation unit that oxidises the leach stream and recovers further product therefrom via a filtration process.

In a fourth aspect, the invention provides an ore beneficiation method, comprising: separating a feed into a concentrate stream that includes product solids and a leach stream that includes arsenic via a leaching process; oxidising the leach stream; and recovering further product from the leach stream via a filtration process.

In a fifth aspect, the invention provides an apparatus, when used for the beneficiation of ore, comprising: a separation unit that separates a feed into a concentrate stream that includes product and a leach stream that includes arsenic via a leaching process; and a reclamation unit that is arranged downstream of the separation unit that reclaims reagent from the leach stream for re-use in the leaching process.

In a sixth aspect, the invention provides an ore beneficiation method, comprising: separating a feed into a concentrate stream that includes product and a leach stream that includes arsenic via a leaching process; and reclaiming reagent from the leach stream for re-use in the leaching process.

In a seventh aspect, the invention provides an apparatus, when used for the beneficiation of ore, that includes a reclamation unit arranged to recover caustic reagent from a leach stream of an upstream leaching process, the reclamation unit comprising: a precipitation module that produces a filtrate including the caustic reagent via a reaction of the leach stream and a lime supply; a crystalliser module that removes crystallised impurities from the filtrate; and an evaporation module that evaporates remaining filtrate to thereby increase a concentration of the caustic reagent for re-use in the upstream leaching process.

In an eighth aspect, the invention provides a method of recovering caustic reagent from a leach stream of an upstream leaching process used in the beneficiation of ore, comprising: precipitating a filtrate that includes the caustic reagent via a reaction of the leach stream and a lime supply; crystallising and removing impurities from the filtrate; and evaporating the remaining filtrate to thereby increase a concentration of the caustic reagent for re-use in the upstream leaching process.

### BRIEF DESCRIPTION OF DRAWINGS

The invention will now be described, by way of non-limiting example only, with reference to the accompanying drawings, in which:
Figure 1 is a flowsheet illustrating an ore processing apparatus in accordance with an embodiment of the invention;
Figure 2 is an enlarged view of a preparation unit of the ore processing apparatus;
Figure 3 is an enlarged view of a separation unit of the ore processing apparatus;
Figure 4 is an enlarged view of a oxidation unit of the ore processing apparatus;
Figure 5 is an enlarged view of a reclamation unit of the ore processing apparatus;
Figure 6 is an enlarged view of a precipitation module of the reclamation unit;
Figure 7 is an enlarged view of a crystallisation module of the reclamation unit;
Figure 8 is an enlarged view of an evaporation module of the reclamation unit;
Figure 9 is a schematic representation of a method of beneficiating ore, in accordance with an embodiment of the invention;
Figure 10 is a schematic representation of a method of beneficiating ore, in accordance with an embodiment of the invention;
Figure 11 is a schematic representation of a method of beneficiating ore, in accordance with an embodiment of the invention; and
Figure 12 is a schematic representation of a method of beneficiating ore, in accordance with an embodiment of the invention.

### DETAILED DESCRIPTION

In the following detailed description, reference is made to accompanying drawings which form a part of the detailed description. It will be readily understood that the aspects of the present disclosure, as generally described herein and illustrated in the drawings may be arranged, substituted, combined, separated and designed in a wide variety of different configurations, all of which are contemplated in this disclosure.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, a limited number of the example methods and materials are described herein.

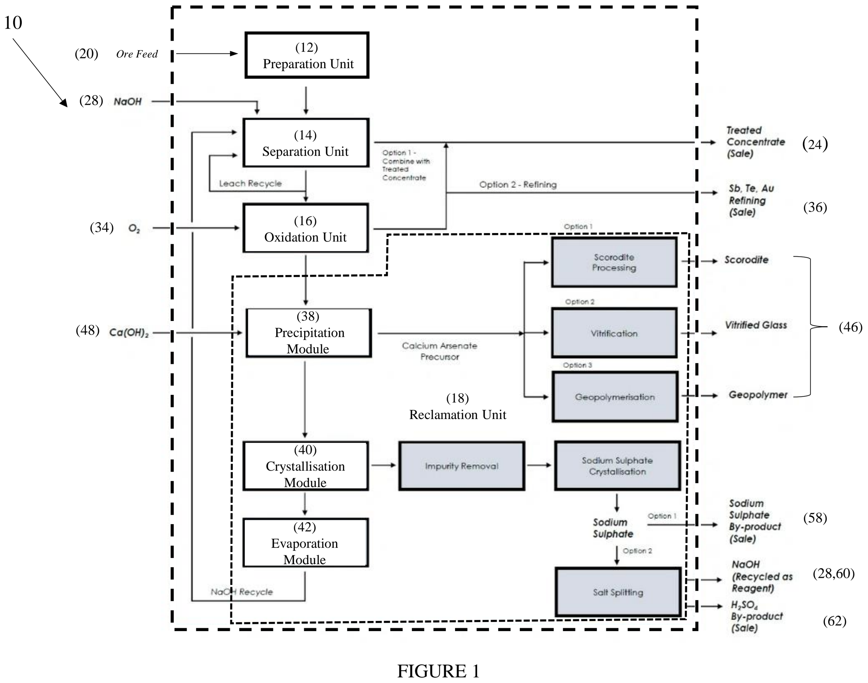

The embodiments of the invention shown in Figures 1 to 12 are described herein in the context of an copper ore beneficiation method for treating low grade copper to a saleable concentrate product with improved cost effectiveness and energy efficiency, and an apparatus for carrying out the method. It is understood that the invention is also suitable for use in the beneficiation and/or recovery of other minerals found in sulphide-based ore deposits such as iron (Fe), antimony (Sb), gold (Au) and nickel (Ni).

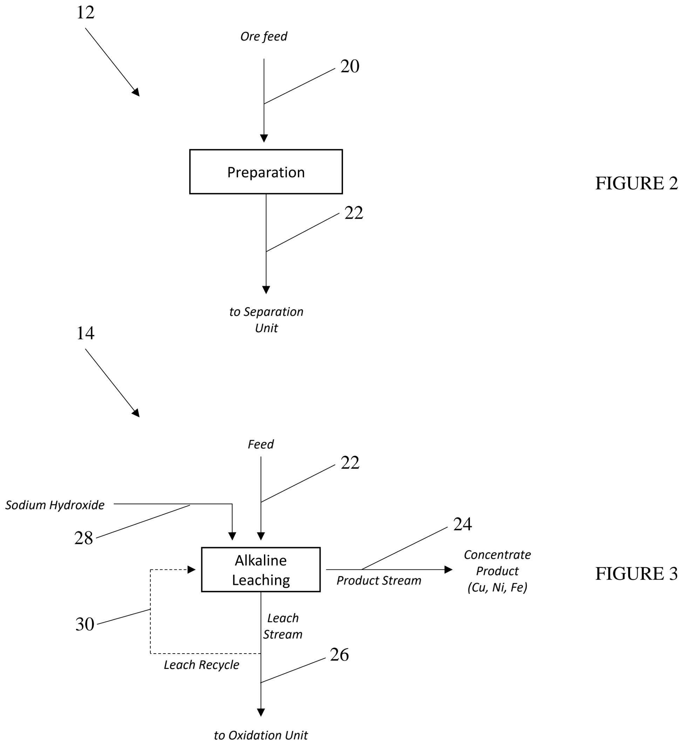

With reference to Figure 1, there is shown an apparatus 10 for the beneficiation of copper ore according to an embodiment of the invention. This Figure shows the apparatus 10 in its entirety, whereas Figures 2 to 8 show discrete units and modules thereof, with said units and modules being integrated together to provide the apparatus 10.

In general terms, the apparatus 10 comprises a preparation unit 12 that is arranged to receive a supply of mined ore from an ore body. The mined ore is preferably, but not limited to, low grade copper ore. The receiving unit 12 is arranged to provide an input feed to a separation unit 14. The separation unit 14 is arranged to separate the input stream into a product stream that includes valuable copper product and a leach stream via a leaching process. The leach stream is then passed into an oxidation unit 16. The oxidation unit 16 is configured to oxidise the leach stream, with further product such as gold and antimony being recovered therefrom, and remaining filtrate being fed into a reclamation unit 18. The reclamation unit 18 is configured to produce a calcium arsenate precursor that provides means for arsenic to be safely managed on site and to reclaim reagent from the oxidized solution for subsequent re-use in the leaching process.

Advantageously, it is understood that the apparatus 10 described herein can be used to enable arsenic management at the site in which the ore is mined. Thereby, the toxic material need not be shipped to populated regions, resulting in health risks. Storage of the arsenic at the mine site in an environmentally stable condition further reduces environmental and health risks. Further, copper is often found in deposits including other metals such as lead, zinc, gold, and silver. The apparatus 10 improves recovery of these other valuable metals during a copper beneficiation process to increase the commercial value of the beneficiation process. In addition, by-products produced from the beneficiation process may also be saleable, increasing profits and reducing waste. Furthermore, in addition to removing arsenic and valorising gold, antimony, tellurium values, the apparatus 10 is configured to allow recovery and recycle of reagents and water in order to minimise the costs and enhance the sustainability and environmental stewardship of the process.

Within this description, the terms "feed concentrate" and/or "raw ore feed" are understood to refer, collectively, to loose rock and mineral that has been removed (either mechanically or by natural processes) from the ore body that is of comparatively "low grade" or "sub grade" - typically sulphide ores with elevated levels of arsenic, including, for example, copper ores having an arsenic content of about 0.5% w/w or greater. Such mined ore is understood to be inefficient and unsafe to process by conventional means.

Each unit or module of the apparatus 10 will now be described in detail, with reference to the relevant Figures. The units will be described in what may be generally considered sequential order, with respect to the overall beneficiation process.

The preparation unit 12 will first be discussed with reference to Figure 2. As shown, the preparation unit 12 is arranged to receive a raw feed 20 of low quality ore and to pass a feed concentrate 22 of suitable, predetermined As content to the separation unit 14. The raw feed 20 may, for example, be a run-of-mine (ROM) feed taken from an ore body of known As content and/or comprise a blend of different feeds of known As content to be blended at set ratios to generate a feed concentrate 22 of a target As content suitable for subsequent processing. Preferably, the target As content of the feed concentrate 22 is within a range of between 0.5% to 5% w/w As. While in a preferred embodiment, the feed concentrate 22 is provided in the form of a slurry comprising approximately 50% w/w solids, it is understood that the feed concentrate 22 may be in any suitable form for subsequent processing, such as a filter cake of lower moisture proportion, for example 8-10% moisture, or a slurry of differing solids constitution.

Moving now to Figure 3, which shows the separation unit 14. As shown, the feed concentrate 22 from the preparation unit 12 is passed into the separation unit 14 as input for the leaching process, where the feed 22 is separated into a product stream 24 that includes concentrated product, and leach stream 26 that includes impurities. The alkaline leaching process uses a reagent 28 as input to the separation unit, to selectively extract impurities including arsenic from the agitated feed concentrate 22. Preferably, the reagent 28 is a caustic reagent such as sodium hydroxide, which generates sodium sulphide in-situ during the leach process. Both the sodium hydroxide 24 and generated sodium sulphide participate in the leaching process. In the preferred embodiment, the reagent 28 that is used in the leaching process is a mixture of reclaimed sodium hydroxide from the reclamation unit 18, and fresh sodium hydroxide supplied to the separation unit 14 from an external supply.

The leaching process is preferably operated at a suitably high temperature. For example, the temperature may be approximately 95° C. Depending upon the concentration of impurities in the feed concentrate, the exposure to the reagent 28 or leach residence time may vary, for example, between 4 and 30 hours. It is understood that for impurity concentrations of the leach concentrate 22 above about 3% w/w, an extended leach residence time may be required. Similarly, for impurity concentrations of below about 1%, a reduced leach residence time may be required.

The separation unit 14 is arranged to extract substantially all impurities from the feed concentrate 22. Preferably, greater than about 95% of the arsenic content of the feed concentrate 22 is extracted by the leaching process, while the extraction of product materials such as copper, iron, zinc, aluminium, and lead, is substantially negligible. In this manner, the arsenic and/or other impurities such as antimony (Sb) forms a liquid portion that is then filtered to separate out and wash potential saleable solid mineral products, such as copper, lead, and nickel, from impurities extracted into the liquid portion of the feed concentrate slurry 22 during the leaching process.

With respect to the embodiment shown, the separation unit 14 uses a filter to separate the leached slurry into a concentrate product in the form of product stream 24 and the leach stream 26. Preferably, the filter is provided in the form of a filter press with wash and blow capability. For example, the filter could me a vertical tower press. However, it is understood that other types of filters and equipment suitable for separating a solid product from an impurity containing liquid may also be used - for example, it is contemplated that a series of decanter centrifuges may also be used. The filter press is preferably equipped with membrane squeezing, thereby minimising the risk of entrainment of impurities into the product stream 28. The product stream 28 is washed during the filtration process to further prevent or at least mitigate contamination of the solid product within the product stream 28 from impurities extracted to the leach stream 28. Following the filtration process, the product stream 28 may take the form of a filter cake containing solid, which may then be dewatered - for example by being blown with compressed air - to minimise entrainment of water. In this way, it is understood that the washed product or cleaned concentrate 28 may contain about 10% moisture after processing by the separation unit 14.

It is desirable to minimise the wash ratios required in the separation unit 14 filtration process to increase overall efficiency of the apparatus 10, and, in particular, to decrease the evaporation requirements of the reclamation unit 18. Accordingly, the wash water or leach wash used to wash the product stream 28 is preferably recycled in a loop 30. As shown in Figure 3, the leach recycle 30 represents a portion of the leach stream 26, and is recycled to the filtering process of the separation unit 14 as wash solution. Preferably, the recycled portion is a mixture of a pregnant leach solution (PLS) and the wash. Further, it is preferred to pass on a portion of the leach recycle 30, which portion including sodium sulphide, to the leaching process of the separation unit 14, to reduce the required input level of sodium hydroxide and thereby improve efficiency and performance of the leach process. The wash solution is preferably also heated, for example to about 70° C, which has been shown to improve the wash efficiency and minimise crystallisation of the concentrate product 28.

The product 28 output by the separation unit 14 may be further processed, stored, or transported. For example, the product 28 may flow by gravity from the filter onto a screw conveyor for storage or transport. The leach stream 26 including the extracted impurities may, simultaneously, be passed on to the oxidation unit 16. It is understood that the output of both product 28 and leach steam 26 may be undertaken by any suitable means for conveying solid and liquid separated product, respectively without contamination.

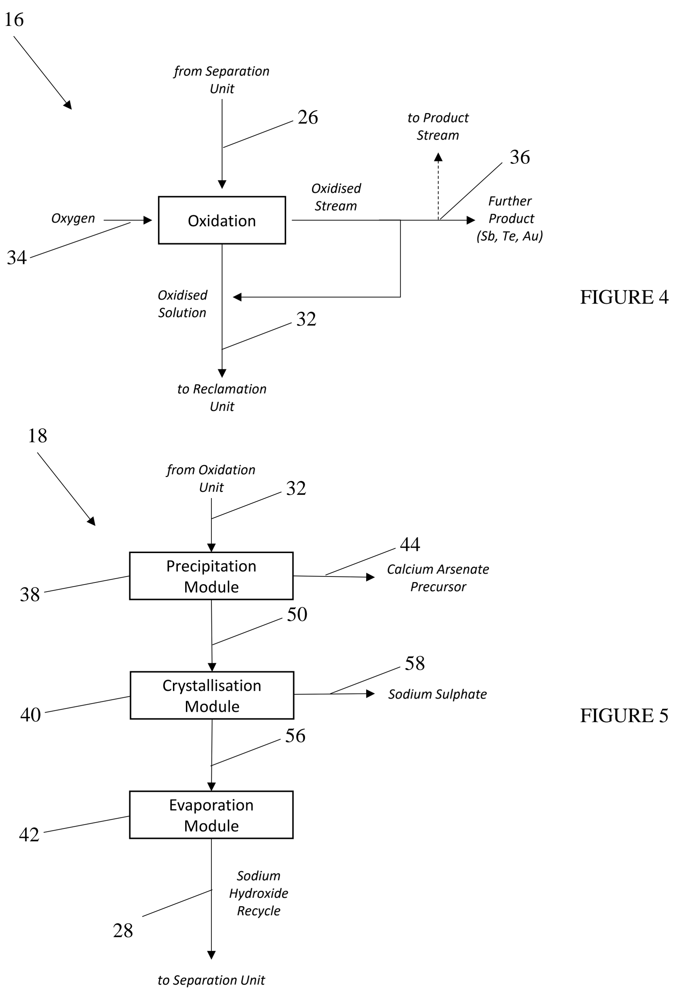

Moving now to Figure 4, which shows the oxidation unit 16. The oxidation unit 16 is configured to receive the leach stream 26 from the separation unit 12. For example, at least a remaining portion of the leach stream 26 (i.e. after a portion has been diverted via recycle 30) may be input to the oxidation unit 16 from the filter by gravity flow into a tank, optionally stored, and them pumped into the oxidation unit 16.

The oxidation unit 16 comprises a pressure vessel or autoclave, into which the leach stream 26 is supplied, by gravity flow, pumping, or the like. For example, the pressure vessel may comprise a conventional four compartment submarine type autoclave. It is also understood that any suitable arrangement of pressure vessel for oxidation of an impurity stream may be used, and that the pressure vessel may be constructed from any suitable material capable of withstanding high pressures. The pressure vessel is arranged to oxidise the leach stream 26 using a supply of reactant 32 to produce an oxidised solution 34. Preferably, the reactant 32 supplied is industrial grade oxygen, for example at greater than about 99.5% w/w, to prevent the buildup of inert gases in the pressure vessel, thereby reducing the requirement for frequent venting of the pressure vessel.

Pressure oxidation of the leach stream 26 by the pressure vessel oxidises substantially all (for example, about 99%) of the reduced sulphur within leach stream 26 to sodium sulphate, and oxidises the arsenic within the leach stream 26 from the As³⁺ to the As⁵⁺ valence state in preparation for precipitation downstream in the reclamation unit 18. As shown, the pressure vessel is operated at a target temperature that is preferably chosen from a range of about 150° C to 220° C (or, more preferably, about 170° C), and a pressure of about 1,400 kPa. In a preferred embodiment, the residence time of the leach stream 26 in the pressure vessel of the oxidation unit 16 is about two hours. It is understood that the residence time of the solution inside the pressure vessel is dependent upon the temperature and pressure of the autoclave, and the reactant supplied. The target temperature is obtained by heat provided by the exothermic oxidation of reduced sulphur species in the leach 26, moderated by cooling such as from cooling coils in the pressure vessel. It is understood that the temperature of the pressure vessel may also be controlled by use of selective discharge of produced flash steam to flash vessels.

Discharge and flash from the oxidation unit 16 include low-pressure steam produced by the oxidation process, which is advantageously condensed by a condenser, and preferably transferred to the separation unit 14 for reuse. The recycled steam may be flashed to atmosphere, or, alternatively, may be used for leach wash to wash the feed concentrate 22.

After oxidation in the pressure vessel, further product 36 may be recovered via a filtration process. In particular, the oxidation unit 16 comprises a filter to recover the additional solid product precipitates 36 that may include gold, antimony, and tellurium. For example, the oxidised stream may be gravity fed into a discharge tank and pumped to a candle filter. It is understood that any suitable filter suitable may be used. Typically, the oxidised solution 34 includes less than about 1% w/w of solid precipitates 36 to be separated and extracted. After filtering, the produced precipitate cake including the further product 36 is washed to minimized carryover of contaminants such as the impurities of the oxidised solution 34. The solid further product 36 is then transferred, such as discharge by compressed air, for further processing, storage, transport, or sale. The further product 36 is optionally re-slurried with water. After the further product 36 is extracted from the oxidised solution 34, the remaining portion of the solution 34 including impurities is passed to the reclamation unit 18.

As shown in Figure 5, the reclamation unit 18 is configured to reclaim reagent 28 from the oxidised solution 32 for re-use in the leaching process. In particular, sodium hydroxide reagent 28 is extracted from the oxidised solution 32 via a series of processes undertaken by respective modules 38, 40, 42 thereof. The modules 38, 40, 42 are further configured to extract impurities including arsenic from the oxidised solution 32, and optionally, to further process the impurities into further saleable product.

The following passages will now concentrate on the arrangement of respective modules within the reclamation unit 18 of the illustrated embodiment.

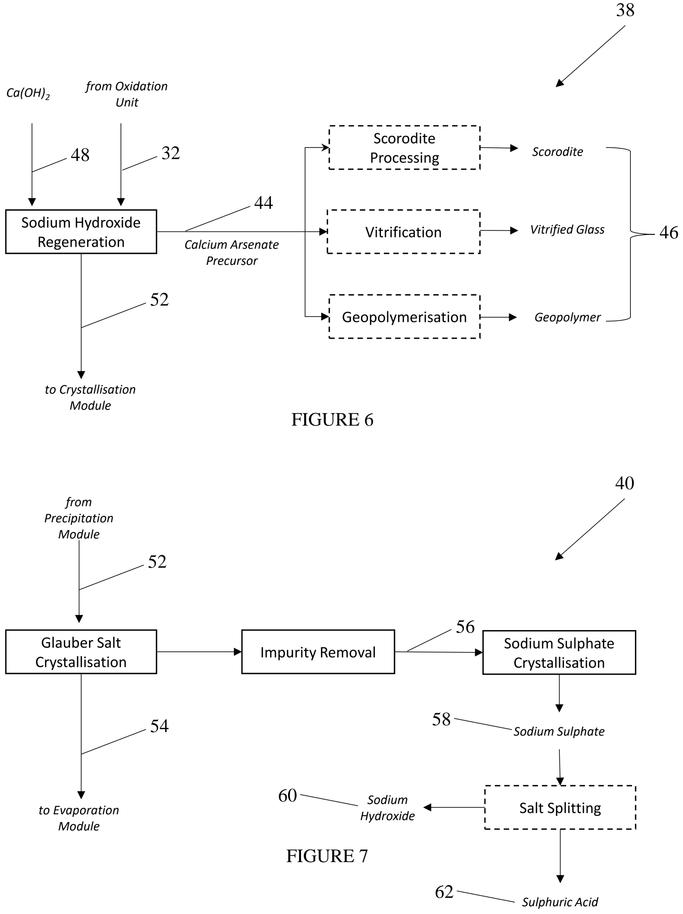

Turning to Figure 6. Oxidised solution 32 from the oxidation unit 16 is fed or otherwise input to the precipitation module 38 by gravity flow, pumping, or other means. As shown, the precipitation module 38 comprises a pressure vessel or autoclave, into which the oxidised solution 36 is pumped or otherwise suitably transferred into. The precipitation module 38 is configured to extract an arsenic impurity from the oxidised solution 36, and to further process the arsenic impurity as a precursor 44 that may be transformed into or otherwise encapsulated into an arsenic byproduct 46. Alternatively, the arsenic extracted by the precipitation module 38 may be stored or disposed of.

The pressure vessel of the precipitation module 38 may, for example, be provided in the form of a submarine type autoclave, with solution transfer between chambers via baffle overflow. It is also understood that any suitable arrangement of pressure vessel for precipitation of an impurity containing solution under caustic conditions may be used - for example, a vertical autoclave, loop reactor or pipe reactor - and that the pressure vessel may be constructed from any suitable material.

The pressure vessel is operated at a suitably high temperature to enable precipitation of a precursor 44 under caustic conditions from the oxidised solution 36. Preferably, the precipitate is in the form of a calcium arsenate precursor 44. For example, the pressure vessel may be operated at a target temperature of about 170° C and at a target pressure of about 700 kPa, which is the same pressure of the saturated steam produced by the precipitation module 38. Thereby, no overpressure gas is required. Heating for the pressure vessel may be provided by band heaters about disposed about the pressure vessel. Cooling may be provided by coiling coils including cooling water. It is understood that any suitable heating and cooling arrangements for a precipitation reaction under caustic conditions in a pressure vessel may be employed. The cooling means of the pressure vessel also provides for shut down purposes.

A reactant 48 is added to the pressure vessel of the precipitation module 38, at a rate or ratio to match the incoming impurity mass flowrate of the oxidised solution 36. Preferably, the reactant 48 is hydrated lime, resulting in a calcium arsenate precipitation reaction. Sodium hydroxide is produced from the reaction and remains in solution after precipitation of the precursor 44. As shown in the Figure, the precursor 44 may then be stored, transported, sold, or further processed by arsenic fixation processes to generate an arsenic byproduct 46. For example, the arsenic based product 46 may be glass, scorodite, and/or a geopolymer.

Preferably, the oxidised solution 32 is agitated during the reaction. The precipitation module 38 includes suitable agitation means. For example, in an embodiment, the agitators may be provided in the form of axial style impellers. It is understood that any suitable agitation means for the pressure vessel may be used. After precipitation, a precipitation slurry 50 is discharged to a flash vessel, which discharges the slurry 50 to atmospheric pressure, whilst increasing the solution species concentration. The flash vessel may be constructed from any suitable high strength, cracking and corrosion resistant material.

Steam which is produced by the reaction is condensed by a condenser of the precipitation module 38, using cooling water for indirection condensation. The condensed steam is preferably transferred to the separation unit 14 for reuse as leach wash to wash the feed concentrate 22.

The precipitation slurry 50 is then passed on from the discharge tank to be filtered, by pumping or other suitable means. Optionally, the discharged precipitation slurry 50 may be transferred to a tank for storage before filtering. Filtration of the precipitation slurry 50 extracts the precursor 44 from the precipitation slurry 50. In this way, it is understood that he precipitation module 38 comprises a filter, preferably in the form of a filter press with membrane squeezing, to minimise entrainment of the liquor of the precipitation slurry 50 in the solid calcium arsenate product 36. This helps mitigate against entrainment of the caustic liquor within the precursor 44 and/or byproduct 46 which would result in losses of the caustic reagent 28, reducing the efficiency of the apparatus.

After filtering, the precursor 44, preferably in the form of a filter cake, is washed to further prevent contamination and to further recover caustic agent 24 entrained therein. Preferably, low wash ratios are used to reduce evaporation requirements downstream. Trials by the applicant have shown that process water used to wash the precursor 44 achieves approximately 95% wash efficiency with respect to sodium hydroxide. The precursor 44 may also be squeezed, blown with compressed air, or treated by other dewatering means to further reduce moisture content. It has been found that about 90% or more of calcium is extracted from the oxidised solution 32 by the precipitation module 38, with the resultant precipitated slurry 50 contains less than about 1g/L of arsenic impurity.

The remaining portion of the precipitation slurry or filtrate 52 is then passed to the crystallisation module 40, which will now be discussed with reference to Figure 7.

The crystallisation module 40 is configured to liberate reagent 28 from the precipitation solution 50 by crystallising any remaining impurities therein. The crystallization module 40 comprises a crystalliser, preferably of a forced circulation type cooling crystalliser with agitation within the crystalliser vessel. The crystalliser cools the input precipitation solution to substantially 0° C, producing a crystallised slurry 54. At this temperature, the solubility of sodium sulphate is about 25 g/L, arsenic solubility is about 1g/L in the precipitation solution 50, which results in crystallisation of Glauber's salt (Na₂SO₄·10H₂O) 52, as well as small amounts of sodium arsenate dodecahydrate (Na₃AsO₄·12H₂O). Crystallisation of the Glauber's salt 52 has a dehydrating effect on the solution, resulting in an increased concentration of sodium hydroxide concentration. For example, the sodium hydroxide concentration may be increased from about 110 to about 150g/L by the crystallisation process.

With respect to the illustrated embodiment, the crystalliser comprises a refrigerant device for temperature control. For example, the refrigerant device may be a water-cooled chiller with forced circulation and an inline heat exchanger. It is understood that any suitable refrigerant device may be used, which is suitable for cooling the precipitation solution 50 to the target temperature of substantially 0° C. Typically, the crystalliser has an 8-hour residence time.

Preferably, the crystallisation module 40 may also comprise a batch centrifuge, into which the crystallised slurry 54 is periodically pumped from the crystalliser. For example, the centrifuge may be a peeler centrifuge. The centrifuge substantially separates the Glauber's Salt crystals from the liquor of the crystallised slurry 54 in batches. For example, the moisture of the crystals may be approximately 2% after centrifuging, minimising contamination of the crystals, and mitigating against losses of caustic reagent 28 as well as soluble arsenic. The filtrate or liquor of the crystallised slurry 54 is then passed on to the evaporation module 42 for further processing.

The crystals are washed in the centrifuge to further prevent contamination from the liquid portion of the crystallised slurry 54. Preferably, to avoid redissolution of the crystals during washing, the wash is saturated sodium sulphate, and the wash is performed at substantially 0° C. Optionally, the crystal wash liquor from the centrifuge may be transferred by pump or the like to the separation unit 14 for use as leach wash. The washed crystals are then discharged from the centrifuge, for example by peeler mechanism, and are gravity fed into an agitated redissolution tank. The redissolution tank combines the crystals with process water to make up a dissolved solution of known sodium sulphate concentration. This dissolved crystal solution 56 may then be stored, transported, sold, or further processed.

As shown in Figure 6, the dissolved crystal solution 56 may undergo further processing to remove co-crystallised arsenic and other entrained impurities, to produce high grade anhydrous sodium sulphate product 58. It is understood that 'high grade' anhydrous sodium sulphate product refers to sodium sulphate with arsenic levels of substantially less than about 10ppm. This further processing includes precipitating arsenic with hydrated lime to remove greater than about 95% of entrained arsenic impurity in the dissolved crystal solution 56 as sodium arsenate. Secondly, evaporative crystallisation processing is performed on the crystal solution 56 to produce anhydrous sodium sulphate product 58.

Preferably, the crystallisation 40 module comprises four agitated precipitation removal heated tanks, preferably arranged in series. The dissolved crystal solution 56 is provided by gravity flow, pumping, or other suitable means, to the first of the four tanks. Hydrated lime slurry is added to the first tank to precipitate calcium arsenate. Preferably, the hydrated lime slurry is added at about a 2:1 molar ratio to the arsenic in the crystal solution 56. For example, the hydrated lime slurry may be about 30% w.w. Preferably, the reaction is operated at about 95° C, as it has been found that this temperature of reaction improves the kinetics and extent of precipitation. It is understood that the reaction may also be operated at any suitable temperate for precipitation of calcium arsenate to occur. Heating of the tanks may be provided by any suitable heating means, such as laboratory hot plates, for example.

Preferably, the pH range for the solution 56 during arsenic removal is between about 10 and about 11. The applicant has determined such ration to be optimal for arsenic removal. While it has been found that strict pH control is not typically required for the solution, addition of sulphuric acid into one of the tanks may result in pH adjustment. In particular, higher arsenic or sodium hydroxide concentrations (or arsenic concentrations of greater than about 20ppm) in the solution 56 generally require pH control during arsenic removal. In a preferred embodiment, the residence time of the solution 56 across the tanks is about four hours.

The precipitated crystal solution is then pumped or otherwise feed through a filter to separate solids from the filtrate or liquor of the precipitated crystal solution. The filter may, for example, be a candle filter. The filtrate is then transferred to an evaporative crystalliser to produce the high-quality anhydrous sodium sulphate product 58. For example, the evaporative crystalliser may be of a forced circulation type. The evaporative crystalliser has been found to remove about 65% of the sodium sulphate from the solution as anhydrous sodium sulphate crystals via water evaporation under a vacuum. It is contemplated that the crystalliser may be constructed from any suitable corrosion resistant material, with high strength, toughness, and cracking resistance. The crystalliser is preferably operated at about 80° C. For example, the evaporative crystalliser may comprise heating means of heater bands or the like to maintain the target temperature. The slurry in the crystalliser body is periodically pumped from the bottom into a batch centrifuge which separates the anhydrous sodium sulphate crystals from the liquor of the precipitated crystal solution after evaporative crystallisation. It has been found that the exit moisture in the anhydrous sodium sulphate crystals 58 is substantially 2%.

The sodium sulphate crystals 58 may then be dried to remove any residual moisture. The resultant high quality anhydrous sodium sulphate power 58 meets industrial specifications for sale, and may be stored, transported, or further processed. Optionally, as shown in Figure 1, all or a portion of the sodium sulphate product 58 may be further processed by salt splitting into sodium hydroxide 60 and sulphuric acid 62. The sodium hydroxide produced thereby may be repurposed as the caustic agent 24 and provided to the separation unit 14. Alternatively, the sodium hydroxide and/or sulphuric acid by products may be sold.

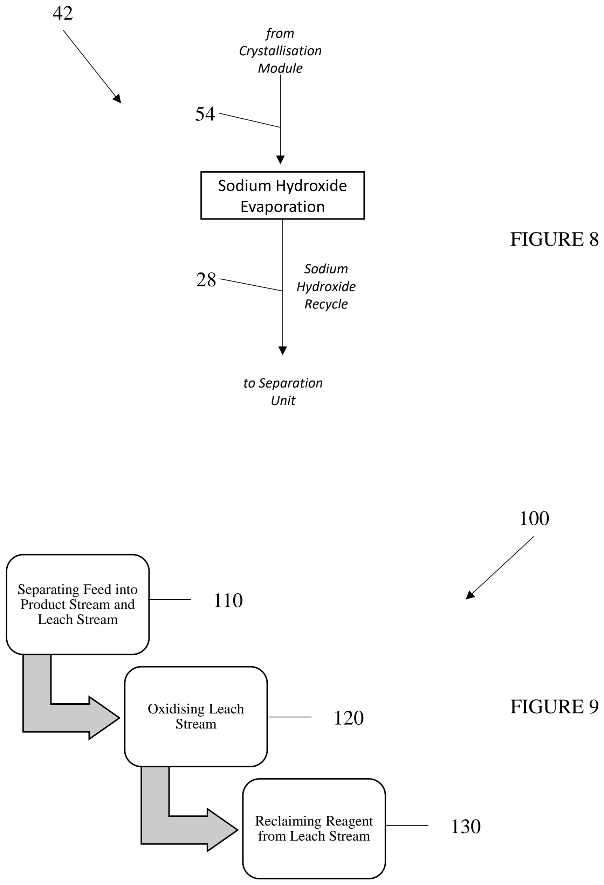

The evaporation module 42 will now be described with reference to Figure 8. The evaporation module 42 is fed filtrate or liquor of the crystallised slurry 54 from the crystallisation module 40. For effective reuse as caustic reagent 28 in the leaching process of the separation unit 12, the concentration of sodium hydroxide is required to meet a certain concentration threshold . Preferably, the concentration threshold is in a range between about 150g/L and about 30% w/w. T As shown in Figure 8, filtrate or liquor of the crystallised slurry 54 from the crystallisation unit 40 is inputted by gravity flow, pumping, or other suitable means to the evaporation module 42, to increase a concentration of the reagent via an evaporation process.

The evaporation module 42 comprises an evaporator, preferably a falling film type evaporator with heat input provided from low-pressure steam. It is understood that any suitable evaporator or heating means may be used. In a preferred embodiment, sodium sulphate is precipitated from the solution during evaporation and remains with the recycled sodium hydroxide to be also recycled reagent 28 to the separation unit 12.

While not shown in the Figures, it is also contemplated that the evaporation module 42 may comprise a condenser that condenses steam produced during the evaporation process with condensate being transferred to a process water tank for reuse. It is understood that the recovery and recycle of reagents and water minimise the costs and enhance the sustainability and environmental stewardship of the process provided by the apparatus 10.

An ore beneficiation method 100 that may be completed by the apparatus 10 described herein will now be described with reference to Figure 9.

In a separating step 110, a feed is separated into a product stream that includes product and a leach stream that includes arsenic via a leaching process. For example, during this step, feed 22 is received by separation unit 14, with the feed being separated into product stream 24 including copper solids and leach stream 26 containing arsenic.

In an oxidising step 120, the leach steam is oxidised to produce an oxidised solution. For example, during this step, leach stream 26 from the separation unit 12 may be oxidised in a pressure vessel to produce oxidised solution 32..

In a reclaiming step 130, reagent from the oxidised solution is reclaimed for re-use in the leaching process. For example, during this step, oxidised solution 32 is received from the oxidation unit 16, and reagent 28 is extracted from the oxidised solution by a series of processes undertaken by respective precipitation, crystallisation, and evaporation modules 38, 40, 42.

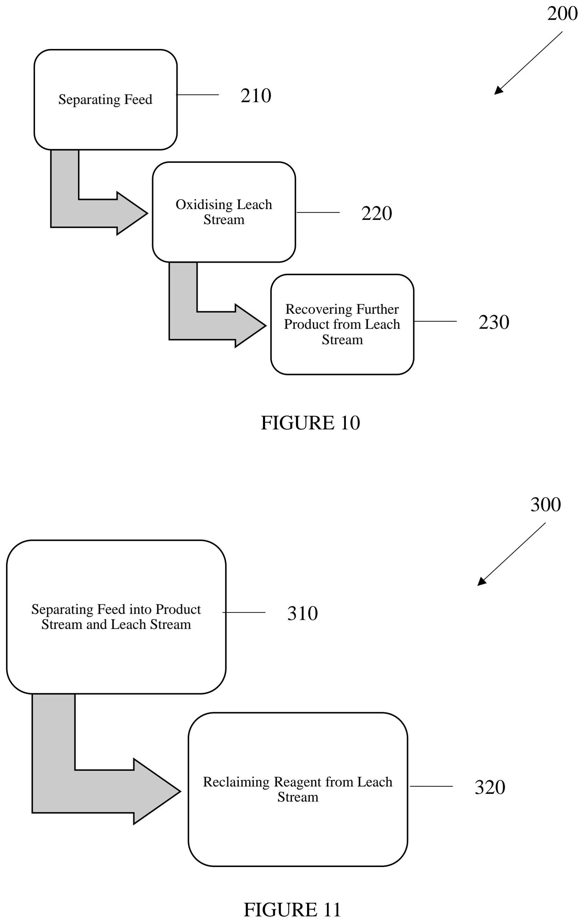

Further iron ore beneficiation methods 200 and 300 will now be described with reference to Figures 10 and 11. It is understood that the methods 200 and 300 may, generally speaking, form part of method 100 as previously described.

With reference to Figure 10, method 200 includes a separating step 210, in which feed is separated into a concentrate stream that includes product solids and a leach stream that includes arsenic via a leaching process. For example, during this step, feed concentrate 22 is separated into the product concentrate stream 24 including valuable copper product and leach stream 26 via a leaching processing performed by the separation unit 14, with the leach stream 26 including impurities such as arsenic.

In an oxidising step 220, a leach stream is oxidised. For example, during this step, the leach stream 26 including arsenic impurities is fed by the separation unit 14 to the oxidation unit 16 and oxidised under pressure conditions to produce oxidised solution 32.

In a recovering step 220, further product is recovered from the leach stream via a filtration process. For example, during this step, the oxidised solution 32 produced by the oxidation unit 16 is filtered to separate a solid precipitate further product 36 such as gold, antimony and tellurium from the remaining liquid portion of the leach stream 26.

With reference to Figure 11, method 300 includes a separating step 310, in which a feed is separated into a concentrate stream that includes product and a leach stream that includes arsenic via a leaching process. For example, during this step, feed 22 is received by separation unit 14, with the feed being separated into product stream 26 which includes copper solids and leach stream 24 including arsenic by a leaching process performed by the separation unit 14.

In a following reclaiming step 320, reagent from the leach stream is reclaimed for re-use in the leaching process. For example, during this step, caustic reagent 28 is extracted from the leach stream 26 by a series of processes undertaken by respective precipitation, crystallisation, and evaporation modules 38, 40, 42.

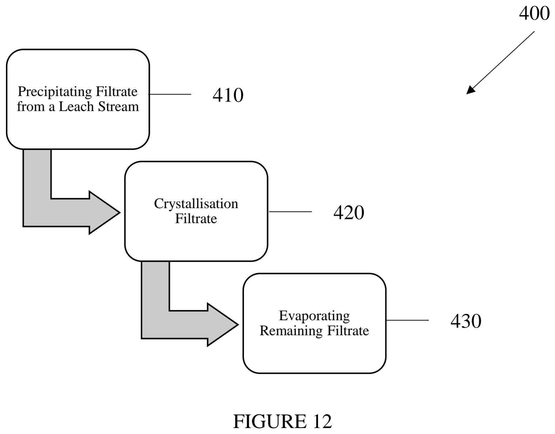

A method of recovering caustic reagent from a leach stream of an upstream leaching process 400 that may be completed by the apparatus 10 described herein will now be described with reference to Figure 12.

In a precipitating step 410, a filtrate that includes the caustic reagent is precipitated via a reaction of the leach stream and a lime supply. For example, during this step, an oxidised solution 32 is received by the precipitation module 38 of the reclamation unit 18 and exposed to a lime reactant 48 to generate a precipitate precursor 44, with filtrate from the reaction in the form of precipitation solution 52 including caustic reagent in the form of sodium hydroxide 28.

In a crystallising step 420, impurities are crystallised and removed from the filtrate. For example, during this step, the filtrate 52 from the precipitation module 38 is received into the crystallisation module 40 and cooled to produce a crystallised slurry 54, which is then filtered to extract the crystallised impurities.

In an evaporating step 430, remaining filtrate is evaporated to thereby increase a concentration of the caustic reagent for re-use in the upstream leaching process. For example, during this step, filtrate or liquor of the crystallised slurry 54 from the crystallisation unit 40 is input to the evaporation module 42 and evaporated to increase the concentration of the sodium hydroxide reagent 28 which may be reused in an upstream leaching process.

Summarily, embodiments of the present invention provide a cost effective and/or energy efficient beneficiation method for low quality mined copper ore material. More specifically, the present invention provides for impurity (such as arsenic and antimony) separation and fixation at the site in which the ore is mined with no expensive downstream metal recovery circuit required, eliminating the requirement for transport across large distances of dangerous materials and associated risks and penalties. In addition, some embodiments of the present invention provide multiple reclamation, reuse, and recycling circuits, which work to optimise the recovery of leach reagents from the impurity separation process, whilst minimising energy usage and the loss of water and media, and thereby minimising the operating costs of the apparatus. In addition, by-products produced from the beneficiation process may also be saleable, increasing profits and reducing waste. The modularity of the described apparatus for the beneficiation process allows the apparatus to be scaled according to processing requirements, whilst also making use of existing and potentially dormant plant equipment previously used for more conventional beneficiation processes.

The reference in this specification to any prior publication (or information derived from it), or to any matter which is known, is not, and should not be taken as an acknowledgment or admission or any form of suggestion that that prior publication (or information derived from it) or known matter forms part of the common general knowledge in the field of endeavour to which this specification relates.

Throughout this specification and the claims which follow, unless the context requires otherwise, the word 'comprise', and variations such as 'comprises' and 'comprising', will be understood to imply the inclusion of a stated integer or step or group of integers or steps but not the exclusion of any other integer or step or group of integers or steps.

### LEGEND

| | | | |
|---|---|---|---|
| 10 | **Apparatus** | 100 | **Method** |
| 12 | Preparation Unit | 110 | Separating Step |
| 14 | Separation Unit | 120 | Oxidising Step |
| 16 | Oxidation Unit | 130 | Reclaiming Step |
| 18 | Reclamation Unit | | |
| 20 | Raw Feed | 200 | **Method** |
| 22 | Feed Concentrate | 210 | Separating Step |
| 24 | Product Stream | 220 | Oxidising Step |
| 26 | Leach Stream | 230 | Recovering Step |
| 28 | Reagent | | |
| 30 | Recycle Loop | 300 | Method |
| 32 | Oxidised Solution | 310 | Separating Step |
| 34 | Oxygen Reactant | 320 | Reclaiming Step |
| 36 | Further Product | | |
| 38 | Precipitation Module | 400 | **Method** |
| 40 | Crystallisation Module | 410 | Precipitating Step |
| 42 | Evaporation Module | 420 | Crystallising Step |
| 44 | Precursor | 430 | Evaporating Step |
| 46 | Arsenic Byproduct | | |
| 48 | Reactant | | |
| 50 | Precipitation Solution | | |
| 52 | Glauber's Salt | | |
| 54 | Crystallised Slurry | | |
| 56 | Crystal Solution | | |
| 58 | Sodium Sulphate Product | | |
| 60 | Sodium Hydroxide Product | | |
| 62 | Sulphuric Acid Product | | |

### EXAMPLE

### Demonstration Plant

### A. Overview

To develop and confirm the method and apparatus described herein, a demonstration plant designed to treat 1%and 3% w/w As feed concentrates was utilised.

The demonstration plant design basis was to treat 15 kilograms per hour of dry weight equivalent feed concentrate.

The preliminary design assumes mineralogy of the feed concentrate is as presented below in Table 1 for each As concentration case.

| Mineral | Chemical Formula | 1% As Case % w/w | 3% As Case % w/w |
|---|---|---|---|
| Chalcopyrite | CuFeS₂ | 50.4 | 35.7 |
| Enargite | Cu₃AsS₄ | 5.3 | 15.8 |
| Pyrite | FeS₂ | 35.8 | 41.1 |
| Quartz | SiO₂ | 8.5 | 7.3 |
| Table 1" Assumed Demonstration Plant Feed Mineralogy | | | |

### B. Equipment

The demonstration plant includes the following units and modules:
1. Preparation Unit
   1.1. Leach Feed Preparation Area
   1.2. Reagent Preparation Area
2. Separation Unit
   2.1. Leach Area
   2.2. Leach Product Separation Area
3. Oxidation Unit
   3.1. Pressure Oxidation Area
   3.2. Pressure Oxidation Product Separation Area
4. Precipitation Module
   4.1. Calcium Arsenate Precipitation Area
   4.2. Calcium Arsenate Product Separation Area
5. Crystallisation Module
   5.1. Glauber's Salt Crystallisation Area
   5.2. Impurity Removal Area
   5.3. Sodium Sulphate Crystallisation Area
   5.4. Drying Area
6. Evaporation Module
   6.1. Caustic Evaporation Area

Plant utilities consist of:
- Industrial grade compressed oxygen gas at >99.5% purity, routinely delivered as a 16-bottle cylinder pack and stored on site,
- Industrial grade nitrogen gas at >99.5% purity, routinely delivered as a 16-bottle cylinder pack and stored on site, and
- Compressed air, generated via an air compressor package, for both plant and instrument air.

### C. Operation and process

The following sections describe the operation of each unit and module of the demonstration plant in detail.

### 1.0 Preparation Unit

### 1.1 Leach feed preparation area

Feed concentrate is fed to the demonstration plant circuit as filter cake, containing 8-10% moisture. The feed rate of concentrate into the demonstration plant leach circuit is nominally 15 kg per hour dry solids, or 360 kg per day. The feed concentrate is conveyed from the feed hopper into the feed repulp tank.

The feed repulp tank operates continuously and receives the feed concentrate filter cake and a recirculating leach feed slurry. The feed repulp tank utilises high agitation intensity to repulp the filter cake prior to advancing to the feed recirculation tank. The recirculating leach feed slurry is added to the tank to maintain a desired percent solids in the feed system.

The feed recirculation tank is filled continuously from the following streams:
- Repulped feed concentrate solids from the repulp tank,
- Filtered PLS recycled from the product filter in Area 2.2,
- Leach wash from the product filter in Area 2.2, and
- Provision is made to add process water for start-up purposes.

### 1.2 Reagent Preparation

Plant reagents consist of sodium hydroxide, hydrated lime and sodium sulphide. Commercial grade 50% w/w sodium hydroxide solution was delivered in IBCs. The tank was installed on a load cell for process control and metallurgical accounting purposes.

Commercial grade 95% w/w hydrated lime was used in the plant. Hydrated lime slurry was prepared from 25 kg hydrated lime bags and dosed to the process through a ring main.

Sodium sulphide was prepared typically for starting up and commissioning duty, via addition of requisite quantity of 25 kg packages to process water in the sodium sulphide reagent tank.

### 2.0 Separation Unit

### 2.1 Leach area

The leach utilises sodium hydroxide, and sodium sulphide generated in-situ by the leach, to selectively extract arsenic and antimony from the concentrate.

The leach train comprises of 5 agitated and covered tanks in series. Slurry travels down the leach train via gravity.

Regenerated and fresh sodium hydroxide was also pumped from the evaporator in the Area 6.1 to the first leach tank to ensure the target caustic tenor in the leach solution was met. The slurry is leached at 95° C and under atmospheric pressure.

The leach produced a leached slurry with typically >95% arsenic extraction. Extraction of copper, iron, zinc, aluminium and lead was shown to be negligible.

The leached discharge slurry was then transferred via gravity overflow into the filter feed tank in Area 2.2.

### 2.2 Leach Product Solid-Liquid Separation

The leach product solid-liquid separation circuit aims to separate and wash the product concentrate from the leach liquor, which undergoes further treatment steps. This is achieved using a filter press with wash and blow capability.

The leach filter is a filter press equipped with membrane squeezing. Filtration design aims to minimise entrainment of leach PLS into the product filter cake avoiding arsenic contamination of the product concentrate. Allowance is made for process water to be used as the second wash to further reduce the arsenic tenor in concentrate, with counter current wash capability. Finally, the filter press has the capability for air blowing, with compressed air utilised to minimise entrainment of water in the product filter cake.

The filter is equipped with 2-stage washing. The combined solutions in the wash feed tank are pumped into the leach filter as the first wash in the filtration cycle ("wash 1"). A second wash ("wash 2") using process water only is transferred from the filter into the wash feed tank, as is typical for a counter current wash regime.

The washed product (cleaned concentrate) containing ~12% moisture is transferred to 44-gallon drums at the demonstration plant battery limit.

The filtered leach PLS from the product filter gravity flows to the leach PLS tank, where it is stored before being pumped to the following unit operations:
- Advance to the autoclave feed tank in the oxidation unit, and
- Recycle to the feed recirculation tank in Area 1.2, to provide feed sulphide units to improve leach performance.

The wash 1 solution exiting from the product filter gravity flows to the leach wash out tank, where it is stored before being pumped to the following unit operations:
- Advance to the autoclave feed tank in Area 3.1 for oxidation, and
- Recycle to the feed recirculation tank in Area 1.2 to control the leach slurry solids percent.

The wash 2 solution exiting from the product filter gravity flows to the leach wash in tank. The re-use of wash solution minimises water inputs into the process and the need to thermally evaporate water.

### 3.0 Oxidation Unit

### 3.1 Pressure Oxidation

The POX feed tank mixes the incoming leach PLS and leach wash solution. The oxidation feed tank is agitated. The oxidation feed tank also receives flashed discharge from the interstage flash vessel if the interstage flash is utilised.

The pressure oxidation autoclave oxidises the leach liquor and wash solution to:
- Oxidise > 99% of the reduced sulphur species to sodium sulphate,
- Precipitate > 99% of soluble gold from solution,
- Oxidise arsenic from the As³⁺ to As⁵⁺ valence state, which aids precipitation in the Area 4.1), and
- Precipitate > 99% antimony from solution.

The autoclave is fed by a suitable high-pressure pump, pumping the feed solution from the autoclave feed tank into the autoclave chamber.

The autoclave comprises either a vertical batch autoclave, or a conventional four compartment submarine type autoclave, with solution transfer between compartments via gravity overflow. The temperature in the first chamber also has the capability to be controlled via an interstage flash vessel, with solution from chamber 1 released to the interstage flash vessel.

Industrial grade oxygen at >99.5% w/w is supplied to the autoclave from a compressed oxygen cylinder pack.

Heating for the autoclave is provided by the exothermic oxidation of reduced sulphur species, with band heaters installed for start-up duty. Temperature control is provided via either cooling coils, flash recycle or combination thereof.

Following the autoclave, the oxidised solution is discharged to the POX discharge flash vessel. A single flash vessel discharges solution down to atmospheric pressure, whilst increasing the solution species concentration.

### 3.2 Pressure Oxidation Product Solid-Liquid Separation

A filter is utilised to recover precipitates (predominantly gold and antimony) from the oxidised solution before it undergoes arsenic removal in Area 4.1.

The oxidised solution from the flash vessels is transferred to the POX flashed discharge tank and is agitated before being pumped to the filter.

A single candle filter removes the <1% w/w solids from the oxidised solution. Following filtration, the precipitate cake is washed with process water to minimise carryover of contaminants into the sodium pyroantimonate/gold product. The product filter cake is discharged via compressed air, re-slurried with water within the filter body and manually transferred to drums at the demonstration plant battery limit.

### 4.0 Precipitation Module

### 4.1 Calcium Arsenate Precipitation

The calcium arsenate precipitation autoclave is operated at elevated temperatures to enable precipitation of calcium arsenate from the oxidised feed solution. Hydrated lime is added to the feed tank at a set ratio to incoming arsenic mass flowrate. Sodium hydroxide is regenerated from the calcium arsenate precipitation reaction, thereby reducing the overall circuit caustic input. Greater than 90% As precipitation from solution is achieved under the process conditions.

The feed tank is agitated and receives and combines filtered oxidised solution from Area 3.2 and hydrated lime reagent slurry from Area 1.3

The autoclave is fed by a suitable high-pressure slurry pump, pumping solution with ~2% w/w solids from the calcium arsenate precipitation feed tank into the autoclave chamber.

The autoclave is either a vertical batch type, or a conventional four compartment submarine type autoclave, with solution transfer between chambers via baffle overflow.

Heating for the autoclave is provided by electric band heaters. The autoclave is agitated with axial style impellers. Cooling coils are installed to provide cooling water for shut down purposes.

Following the autoclave, the precipitation slurry is transferred to the autoclave discharge flash vessel. A single flash vessel discharges solution down to atmospheric pressure, whilst increasing the solution species concentration.

The discharge holding tank receives the flash discharge slurry and is agitated before being pumped to the filter feed tank.

### 4.2 Calcium Arsenate Product Solid-Liquid Separation

The calcium arsenate filter feed tank before pumping to a horizontal filter press.

The filter press is equipped with membrane squeezing. Process water is used to wash the cake to achieve 95% wash efficiency with respect to sodium hydroxide. Compressed is air utilised to minimise moisture content of the calcium arsenate precipitate filter cake.

A two-stage filtration process is utilised to improve the wash efficiency of the filtration step, which is described below.
i. The calcium arsenate precipitate containing 30-40% w/w moisture flows by gravity from the filter onto a bi-directional screw feeder, which transfers the filter cake into the calcium arsenate repulp tank. The repulp tank repulps the filter cake with process water to 30% w/w solids. The repulped slurry is then pumped back into the calcium arsenate filter and refiltered, which further rejects soluble Na salts from the calcium arsenate filter cake.
ii. The repulp washed calcium arsenate precipitate is dropped from the filter onto a bi- directional screw feeder which transfers the calcium arsenate into 44-gallon drums for storage prior to arsenic fixation.

The filtrate and wash from the calcium arsenate filter are discharged into the Glauber's Salt (GS) crystalliser feed tank.

### 5.0 Crystallisation Module

### 5.1 Glauber's Salt Crystallisation

Sulphur is bled from the circuit as sodium sulphate via crystallisation. A high-grade anhydrous sodium sulphate product is generated in the crystallisation module.

The Glauber's Salt ("GS") crystalliser is a Draft Tube Baffle type cooling crystalliser with agitation within the crystalliser vessel. This results in the crystallisation of Glauber's salt (Na₂SO₄.10H₂O) and a small quantity of sodium arsenate dodecahydrate (Na₃AsO₄.12H₂O). Temperature control of the crystalliser is provided by refrigerant from a dedicated water-cooled chiller, with an inline heat exchanger. The product crystal slurry is periodically pumped from the bottom of the crystalliser into a batch centrifuge.

The GS crystals are separated from the liquor in batches by a peeler centrifuge. Minimising exit moisture is required to minimise reagent and soluble arsenic reporting with the crystals.

Primary centrate from the GS centrifuge gravity flows into the GS centrate tank, which is agitated. The tank is heated by band heater to minimise heat load on the downstream evaporator. The centrate is transferred to the sodium hydroxide evaporator in Area 6.1 via pump.

Washed GS crystals from the centrifuge are discharged via peeler mechanism and gravity into a receiving tank, the GS redissolution tank. The tank is agitated and combines GS crystals and process water to dissolve the crystals into a solution prior to further processing in Area 5.2, or directly into Area 5.2 when operational.

### 5.2 Impurity Removal

The dissolved GS crystals undergo further processing to remove co-crystallised arsenic and other entrained impurities. To produce a high-grade anhydrous sodium sulphate product, the GS crystals undergo a two-stage purification process:
i. Arsenic precipitation with hydrated lime to remove >95% of the contained arsenic as calcium arsenate.
ii. Evaporative crystallisation of the post impurity removal sodium sulphate solution to produce anhydrous sodium sulphate, with any entrained arsenic reporting to the solution phase.

Areas 5.2, 5.3 and 5.4 are operated together in campaign mode, separate to the overall demonstration plant. During a campaign, dissolved crystal solution from the GS redissolution tank in Area 5.1 and from the storage IBC's is transferred via pump to the impurity removal precipitation train.

The impurity removal precipitation train comprises of four stirred heated tanks in series. Hydrated lime slurry at 30% w/w is added into the first tank to precipitate calcium arsenate. The reaction is temperature dependant, and the tanks operate at 95° C to improve kinetics and extent of reaction. The required pH range for satisfactory arsenic removal is 10-11. The exit arsenic concentration under these conditions is <20 ppm.

Following the calcium arsenate precipitation circuit, the slurry is filtered through a candle filter to remove the calcium arsenate solids. The filtrate is transferred to the evaporative crystalliser feed tank in Area 5.3. The calcium arsenate solids are discharged into 44-gallon drums for storage prior to arsenic fixation, or waste disposal at the demonstration plant battery limit.

### 5.3 Sodium Sulphate Crystallisation

The sodium sulphate crystalliser feed tank is agitated and heated via heater bands.

The sodium sulphate evaporative crystalliser removes about 65% of the sodium sulphate in solution as anhydrous sodium sulphate crystals under a vacuum. Centrate from the downstream centrifuge is recycled to the feed tank to maintain a crystal slurry discharge from the crystalliser. Temperature control of the crystalliser is provided by steam from the plant boiler in Area 7.3, via forced circulation with an inline heat exchanger. The feed solution is introduced into the crystalliser via the forced circulation loop prior to the inline heat exchanger. The product crystal slurry is periodically pumped from the bottom of the crystalliser into a batch centrifuge. The crystalliser utilises a condenser to condense the evaporate using cooling water from Area 7.2.

The anhydrous sodium sulphate crystals are separated from the liquor by a centrifuge. The crystals are gravity discharged into the sodium sulphate dryer in Area 5.4.

The sodium sulphate centrate is gravity discharged into the sodium sulphate centrate holding tank, where it is recycled to the sodium sulphate crystalliser feed tank. Excess centrate is bled to the GS crystalliser feed tank in Area 4.2.

### 5.4 Sodium Sulphate Drying

The product sodium sulphate dryer removes any residual moisture and produces a dry anhydrous sodium sulphate powder that meets industrial specifications for sale. The discharge of this sodium sulphate product into 44-gallon drums is a battery limit for the demonstration plant.

### 6.0 Evaporation Module

### 6.1 Caustic Evaporation

The caustic evaporator increases the sodium hydroxide concentration before it can be recycled in the leach. The evaporator is a forced circulation type with low-pressure steam produced by the boiler to provide heat input. The caustic evaporator utilises a condenser to condense the evaporate using 15° C cooling water.

The evaporated caustic liquor, is transferred to a caustic storage tank. The tank is equipped with an electric heater band.

Condensed evaporate from the caustic evaporator flows by gravity into the evaporator condensate tank.

The present invention relates to the following embodiments:
Embodiment 1: An apparatus, when used for the beneficiation of ore, comprising:
   a separation unit that separates a feed into a product stream that includes concentrated product and a leach stream that includes arsenic via a leaching process;
   an oxidation unit that produces an oxidised solution from the leach stream; and
   a reclamation unit that reclaims reagent from the oxidised solution for re-use in the leaching process.
Embodiment 2: The apparatus of embodiment 1, wherein reagent used in the leaching process includes both reclaimed reagent from the reclamation unit and fresh reagent from a supply.
Embodiment 3: The apparatus of embodiments 1 or 2, wherein the reagent is sodium hydroxide.
Embodiment 4: The apparatus of any one of the preceding embodiments, wherein the separation unit includes a filter that is arranged to extract solid product from the leach stream via a filtration process.
Embodiment 5: The apparatus of embodiment 4, wherein the filter is a filter press equipped with membrane squeezing.
Embodiment 6: The apparatus of embodiment 4 or embodiment 5, wherein the solid product comprises at least one of antimony, copper, gold, lead, nickel and tellurium.
Embodiment 7: The apparatus of any one of the preceding embodiments, wherein the separation unit includes a recycle loop for recycling at least a portion of the leach stream.
Embodiment 8: The apparatus of embodiment 7, wherein the separation unit separates the feed into the product steam and the leach stream by washing, and the recycled portion of the leach stream comprises a leach wash.
Embodiment 9: The apparatus of embodiment 8, wherein the recycled leach stream includes sodium sulphide.
Embodiment 10: The apparatus of any one of the preceding embodiments, wherein the oxidation unit includes a pressure vessel arranged to oxidise the leach stream.
Embodiment 11: The apparatus of any one of the preceding embodiments, wherein the oxidation unit includes a filter that is arranged to recover further product from the oxidised leach steam via a filtration process.
Embodiment 12: The apparatus of embodiment 11, wherein the filter is a candle filter.
Embodiment 13: The apparatus of embodiment 11 or embodiment 12, wherein the further product includes at least one of gold, antimony and tellurium.
Embodiment 14: The apparatus of any one of the preceding embodiments, wherein the oxidation unit includes a condenser that condenses steam produced during the oxidation process with condensate being transferred to the separation unit for reuse.
Embodiment 15: The apparatus of any one of the preceding embodiments, wherein the reclamation unit comprises a precipitation module that removes arsenic from the oxidised solution as a precipitate.
Embodiment 16: The apparatus of embodiment 15, wherein the precipitate is in the form of a calcium arsenate precursor.
Embodiment 17: The apparatus of embodiment 15 or embodiment 16, wherein a reactant is added to the oxidised solution in the precipitation module.
Embodiment 18: The apparatus of embodiment 17, wherein the reactant is lime.
Embodiment 19: The apparatus of any one of embodiments 15 to 18, wherein the precipitation module is arranged to produce glass from the precipitate.
Embodiment 20: The apparatus of any one of embodiments 15 to 19, wherein the precipitation module is arranged to produce scorodite from the precipitate.
Embodiment 21: The apparatus of any one of embodiments 15 to 20, wherein the precipitation module is arranged to produce a geopolymer from the precipitate.
Embodiment 22: The apparatus of any one of the preceding embodiments, wherein the reclamation unit comprises a crystallisation module that liberates the reagent by crystallising impurities.
Embodiment 23: The apparatus of embodiment 22, wherein the crystallised impurities include Glauber's Salt.
Embodiment 24: The apparatus of embodiment 22 or embodiment 23, wherein the crystallisation module is arranged to produce sodium sulphate byproduct from the crystallised impurities.
Embodiment 25: The apparatus of any one of embodiments 22 to 24, wherein the crystallisation module includes a splitter that is arranged to split the sodium sulphate into sodium hydroxide for use as reagent and sulphuric acid product.
Embodiment 26: The apparatus of any one of preceding embodiments, wherein the reclamation unit comprises an evaporation module arranged to increase a concentration of the reagent via an evaporation process.
Embodiment 27: The apparatus of any one of the preceding embodiments, further comprising a preparation unit that is arranged to provide the feed to the separation unit at a predetermined arsenic content.
Embodiment 28: The apparatus of embodiment 27, wherein the predetermined arsenic concentration is from a range extending between 0.5% and 5.2%.
Embodiment 29: The apparatus of embodiment 27 or embodiment 28, wherein raw ore material provided to the preparation unit is of low grade.
Embodiment 30: An ore beneficiation method, comprising:
   separating a feed into a product stream that includes concentrated product and a leach stream that includes arsenic via a leaching process;
   oxidising the leach stream to produce an oxidised solution; and
   reclaiming reagent from the oxidised solution for re-use in the leaching process.
Embodiment 31: An apparatus, when used for the beneficiation of ore, comprising:
   a separation unit that separates a feed into a concentrate stream that includes product solids and a leach stream that includes arsenic via a leaching process; and
   an oxidation unit that oxidises the leach stream and recovers further product therefrom via a filtration process.
Embodiment 32: An ore beneficiation method, comprising:
   separating a feed into a concentrate stream that includes product solids and a leach stream that includes arsenic via a leaching process;
   oxidising the leach stream; and
   recovering further product from the leach stream via a filtration process.
Embodiment 33: An apparatus, when used for the beneficiation of ore, comprising:
   a separation unit that separates a feed into a concentrate stream that includes product and a leach stream that includes arsenic via a leaching process; and
   a reclamation unit that is arranged downstream of the separation unit that reclaims reagent from the leach stream for re-use in the leaching process.
Embodiment 34: An ore beneficiation method, comprising:
   separating a feed into a concentrate stream that includes product and a leach stream that includes arsenic via a leaching process; and
   reclaiming reagent from the leach stream for re-use in the leaching process.
Embodiment 35: An apparatus, when used for the beneficiation of ore, that includes a reclamation unit arranged to recover caustic reagent from a leach stream of an upstream leaching process, the reclamation unit comprising:
   a precipitation module that produces a filtrate including the caustic reagent via a reaction of the leach stream and a lime supply;
   a crystalliser module that removes crystallised impurities from the filtrate; and
   an evaporation module that evaporates remaining filtrate to thereby increase a concentration of the caustic reagent for re-use in the upstream leaching process.
Embodiment 36: A method of recovering caustic reagent from a leach stream of an upstream leaching process used in the beneficiation of ore, comprising:
   precipitating a filtrate that includes the caustic reagent via a reaction of the leach stream and a lime supply;
   crystallising and removing impurities from the filtrate; and
   evaporating the remaining filtrate to thereby increase a concentration of the caustic reagent for reuse in the upstream leaching process.

## Claims

1. An apparatus, when used for the beneficiation of ore, comprising:
a separation unit that separates a feed into a product stream that includes concentrated product and a leach stream that includes arsenic via a leaching process; and
an oxidation unit that produces an oxidised solution from the leach stream; and/or
a reclamation unit that reclaims reagent from the oxidised solution for re-use in the leaching process.

2. The apparatus of claim 1, wherein reagent used in the leaching process includes both reclaimed reagent from the reclamation unit and fresh reagent from a supply, and preferably wherein the reagent is sodium hydroxide.

3. The apparatus of any one of the preceding claims, wherein the separation unit includes a filter, preferably a filter press equipped with membrane squeezing, that is arranged to extract solid product from the leach stream via a filtration process, the solid product preferably comprising at least one of antimony, copper, gold, lead, nickel, and tellurium.

4. The apparatus of any one of the preceding claims, wherein the separation unit includes a recycle loop for recycling at least a portion of the leach stream, and
preferably wherein the separation unit separates the feed into the product steam and the leach stream by washing, and the recycled portion of the leach stream comprises a leach wash that preferably includes sodium sulphide.

5. The apparatus of any one of the preceding claims, wherein the oxidation unit includes a pressure vessel arranged to oxidise the leach stream and/or a condenser that condenses steam produced during the oxidation process with condensate being transferred to the separation unit for reuse.

6. The apparatus of any one of the preceding claims, wherein the oxidation unit includes a filter, preferably a candle filter, that is arranged to recover further product from the oxidised leach steam via a filtration process, the further product including preferably at least one of gold, antimony and tellurium.

7. The apparatus of any one of the preceding claims, wherein the reclamation unit comprises a precipitation module that removes arsenic from the oxidised solution as a precipitate, and preferably wherein the precipitate is in the form of a calcium arsenate precursor.

8. The apparatus of claim 7, wherein a reactant, preferably lime, is added to the oxidised solution in the precipitation module.

9. The apparatus of claim 7 or claim 8, wherein the precipitation module is arranged to produce glass and/or scorodite and/or a geopolymer from the precipitate.

10. The apparatus of any one of the preceding claims, wherein the reclamation unit comprises a crystallisation module that liberates the reagent by crystallising impurities, and preferably wherein the crystallised impurities include Glauber's Salt.

11. The apparatus of claim 10, wherein the crystallisation module is arranged to produce sodium sulphate byproduct from the crystallised impurities and/or includes a splitter that is arranged to split the sodium sulphate into sodium hydroxide for use as reagent and sulphuric acid product.

12. The apparatus of any one of preceding claims, wherein the reclamation unit comprises an evaporation module arranged to increase a concentration of the reagent via an evaporation process.

13. The apparatus of any one of the preceding claims, further comprising a preparation unit that is arranged to provide the feed to the separation unit at a predetermined arsenic content, preferably at a concentration of between 0.5% and 5.2%, wherein, preferably, raw ore material provided to the preparation unit is of low grade.

14. An ore beneficiation method, comprising:
separating a feed into a product stream that includes concentrated product and a leach stream that includes arsenic via a leaching process; and
oxidising the leach stream to produce an oxidised solution; and/or
reclaiming reagent from the oxidised solution for re-use in the leaching process.

15. An apparatus, when used for the beneficiation of ore, that includes a reclamation unit arranged to recover caustic reagent from a leach stream of an upstream leaching process, the reclamation unit comprising:
a precipitation module that produces a filtrate including the caustic reagent via a reaction of the leach stream and a lime supply;
a crystalliser module that removes crystallised impurities from the filtrate; and
an evaporation module that evaporates remaining filtrate to thereby increase a concentration of the caustic reagent for re-use in the upstream leaching process.
